# EUROPEAN PATENT SPECIFICATION

(11) **EP 2 876 009 B1**
(45) Date of publication and mention of the grant of the patent: **07.12.2016**
(21) Application number: 14187417.2
(22) Date of filing: 02.10.2014
(51) Int. Cl.: B60T 15/20, B60T 11/10

(54) **Piloting device for piloting a braking valve of a trailer**
Steuerungseinrichtung für die Steuerung eines Anhängerbremsventils
Dispositif de commande de soupape de freinage de remorque

(30) Priority: 02.10.2013 IT MO20130277
(43) Date of publication of application: 27.05.2015
(73) Proprietor: Studio Tecnico 6 M S.R.L., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Brunacci, Marco

(56) References cited:
- EP-A1- 2 591 963

## Description

The present invention relates to a piloting device for piloting a braking valve of a trailer.

Document EP-A-2591963 discloses a piloting device according to the preamble of claim 1.

It is known that in the case of a trailer towed by a prime mover their braking systems are operatively connected so when the prime mover is braked by the operator, the towed trailer is also braked.

The braking system of the trailer is therefore piloted by the braking system of the prime mover in order to synchronize the braking forces acting on these.

More in particular, the prime movers of known type comprise a braking valve, having a relative valve body within which is housed sliding a braking piston piloted by the braking system of the prime mover itself and suitable for sending a fluid under pressure into the braking system of the trailer.

More in particular, the valve body comprises a braking chamber within which is fitted the braking piston and comprises a piloting chamber, communicating with the braking system of the prime mover, within which a piloting piston is fitted sliding. By effect of the increase in pressure in the piloting chamber, the piloting piston moves towards the braking piston to cause it to move.

It follows therefore, that the moment the operator operates the brake pedal of the prime mover, he/she intervenes on the wheels of same and, by means of the braking valve, on the braking system of the trailer.

In order to achieve the efficient braking of the trailer, it is of crucial importance that the pressure in the braking circuit of the trailer increase in a different way, along with the increase in pressure in the braking circuit of the towing vehicle, according to the load conditions of the trailer itself.

In particular, in the case of a fully-loaded trailer, its braking system needs to quickly react to the braking of the towing vehicle, while in the case of the trailer being empty, it is preferable that the pressure in the relative braking system increase less suddenly.

The known equipment for the braking of a trailer has a number of drawbacks.

It is in fact known that the pressure inside the braking system of the trailer increases with a certain delay with respect to that of the towing vehicle.

Such delay is due in particular to the force required to operate the brakes of the trailer, i.e., the force needed to move the braking piston and therefore to overcome the resistance of the springs acting on it, as well as the internal frictions.

Such delay can cause the latter, in particular in the case of the trailer being fully loaded, to apply a thrust action on the towing vehicle.

Because large diameter piloting pistons are used to obtain a prompt response of the trailer's braking system, it can occur on the other hand that the braking force on the trailer is too intense and sudden, in particular when lightweight trailers are used.

The main aim of the present invention is to provide a trailer braking device that permits optimizing the relation between braking pressure of the prime mover and that of the trailer, at both high and low braking rates, in such a way as to avoid any imbalance of the braking regimes and, therefore, an incorrect distribution of the forces at work.

Within this aim, one object of the present invention is to obtain a prompt response of the trailer brakes following the braking of the towing vehicle, avoiding at the same time the braking force on the trailer being too intense and sudden, in particular at low braking regimes.

Another object of the present invention is to maintain the growth curve of the pressure in the trailer's braking system according to the pressure in the braking system of the towing vehicle within a safety range, including in the event of an electric default existing.

Another object of the present invention is to provide a piloting device for piloting a braking valve of a trailer which allows to overcome the mentioned drawbacks of the prior art within the ambit of a simple, rational, easy and effective to use as well as affordable solution.

The above mentioned objects are achieved by the present piloting device for piloting a braking valve of a trailer according to the claim 1.

Other characteristics and advantages of the present invention will become better evident from the description of a preferred but not exclusive embodiment of a piloting device for piloting a braking valve of a trailer, illustrated by way of an indicative, but not limitative, example in the accompanying drawings in which:
Figure 1 is a sectional view of a braking equipment comprising a device according to the invention, in a first embodiment and in the idle condition;
Figure 2 is a sectional view of a braking equipment comprising a device according to the invention, in a second embodiment and in the idle condition;

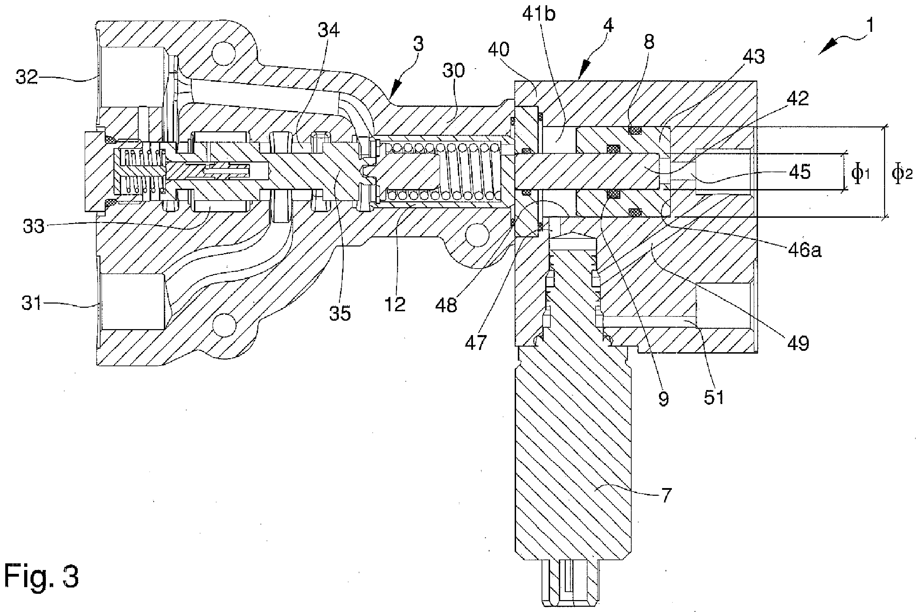

Figure 3 is a sectional view of a braking equipment comprising a device according to the invention, in a third embodiment and in the idle condition;
Figure 4 is a sectional view of the equipment of Figure 3 in a first operating condition;

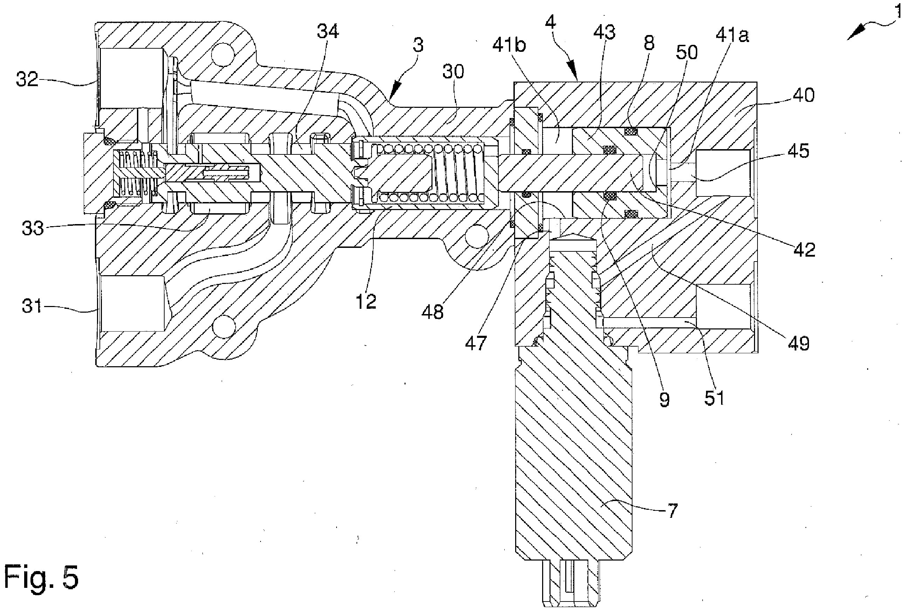

Figure 5 is a sectional view of the equipment of Figure 3 in a second operating condition;
Figure 6 is a schematic representation of the equipment in the third embodiment;
Figure 7 is a sectional view of a braking equipment comprising a device according to the invention, in a fourth embodiment;
Figure 8 is a schematic representation of the equipment in the fourth embodiment.

With particular reference to such Figures, globally indicated by reference number 1 is a trailer's braking equipment.

The equipment 1 comprises a braking valve 3 of a trailer and a piloting device 4 of the braking valve itself.

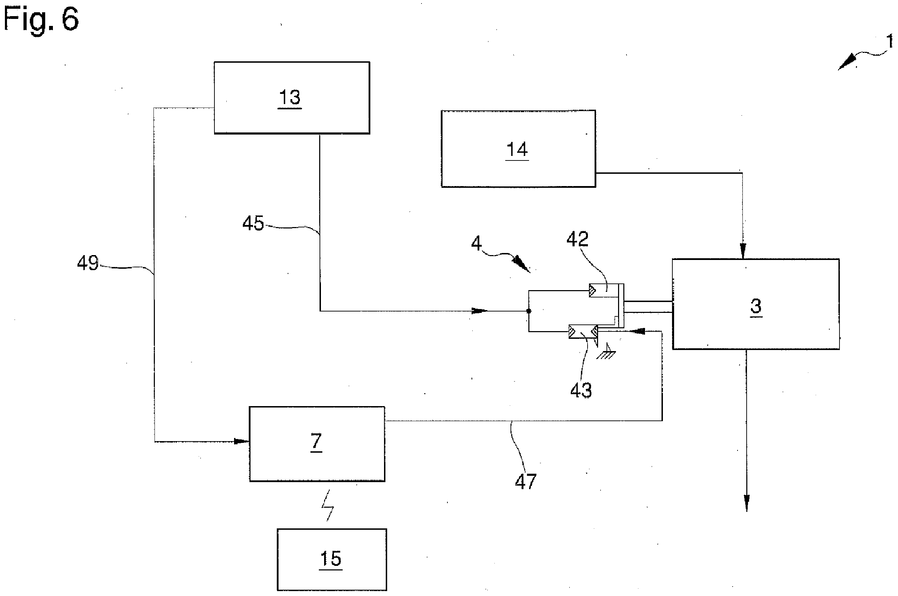

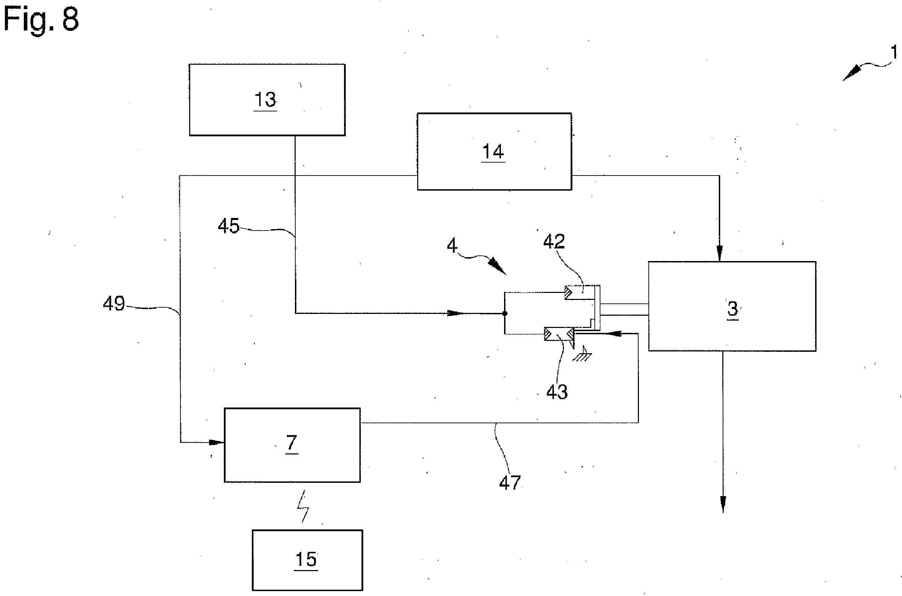

The device 4 can be associated with a braking line connected in a fluid-dynamic way (or in a hydraulic or pneumatic way) to the master braking cylinder of a towing vehicle identified in the diagrams of figures 6 and 8 by the reference number 13.

The equipment 1 then comprises a supply source, e.g., the type of a pump, serving at least a first line, e.g., a high pressure line (e.g. 200 bar) connected in a fluid-dynamic way to the braking valve 3. In the diagrams shown in figures 6 and 8, the supply source is identified by the number 14.

More in detail, the braking valve 3 is the type known to the technician in the sector and comprises a body 30 hollow inside with at least a supply gap 31, at least a drain gap 32 and at least a braking gap 33 connectable to the trailer's braking system. The supply gap 31 is, e.g., connected in a fluid-dynamic way to the above-mentioned first line, which is therefore suitable for introducing a fluid under pressure inside the braking valve 3.

The body 30 therefore defines a braking chamber 34 inside which is housed sliding a distributor cursor 35, which is mobile between an idle configuration and at least a braking configuration wherein it is moved towards the braking gap 33 with respect to the idle configuration to convey work fluid into the trailer's braking system. The remaining elements of the braking valve 3 are not described below in detail inasmuch as of known type for the technician of the sector and not of importance to understand the present invention.

The piloting device 4 in turn comprises a hollow body 40 defining a chamber 41a, 41b inside which is housed sliding at least a piloting piston 42, 43. The body 40 is fixed, during use, to the body 30 of the braking valve 3.

Advantageously, the piloting piston 42, 43 has two different external diameters, identified by the symbols φ1 and φ2 respectively in the illustrations, which define two different thrust areas arranged on opposite sides of the piloting piston itself.

More in detail, the piloting piston 42, 43 splits the chamber 41a, 41b into a piloting chamber 41 a facing onto a first thrust area and into a contrasting chamber 41 b facing onto the other thrust area.

Suitably, the thrust area onto which the piloting chamber 41 a acts is bigger than the thrust area onto which the contrasting chamber 41b acts.

More in particular, the piloting piston 42, 43 is associated sealed with the body 40 and is suitable for interacting, e.g., by means of the spring bearing piston 12, with the distributor cursor 35 to move it from its idle configuration towards the braking configuration, passing through an opening in common with the bodies 30 and 40.

The device 4 then comprises at least a fluid-dynamic piloting circuit 45 (which can therefore be hydraulic or pneumatic) connectable to the braking system of a towing vehicle, and more in particular to the braking line of the master cylinder of the towing vehicle, and which is in communication with the piloting chamber 41 a. More in detail, the piloting chamber 41 a has a first connection gap with the piloting circuit 45, which is defined in correspondence to its bottom wall 46a.

According to the invention, the device 4 also comprises a fluid-dynamic contrasting circuit 47 (which can therefore be hydraulic or pneumatic) communicating with the contrasting chamber 41b. More in detail, the contrasting chamber 41b has a second connection gap connecting to the contrasting circuit 47, which is defined in correspondence to its side wall 48.

Advantageously, the device 4 also comprises connection means 7 which can be started to place the contrasting circuit 47 in communication with a supply circuit 49 which can be connected to a source under pressure so the piloting circuit 45 applies a first action on the piston 42, 43 and the contrasting circuit 47 applies a second action on the piloting piston itself directed in the opposite direction to the above-mentioned first action.

Depending on the pressure in the contrasting circuit 47, the force consequently varies which the piloting piston 42, 43 applies on the spring bearing piston 12.

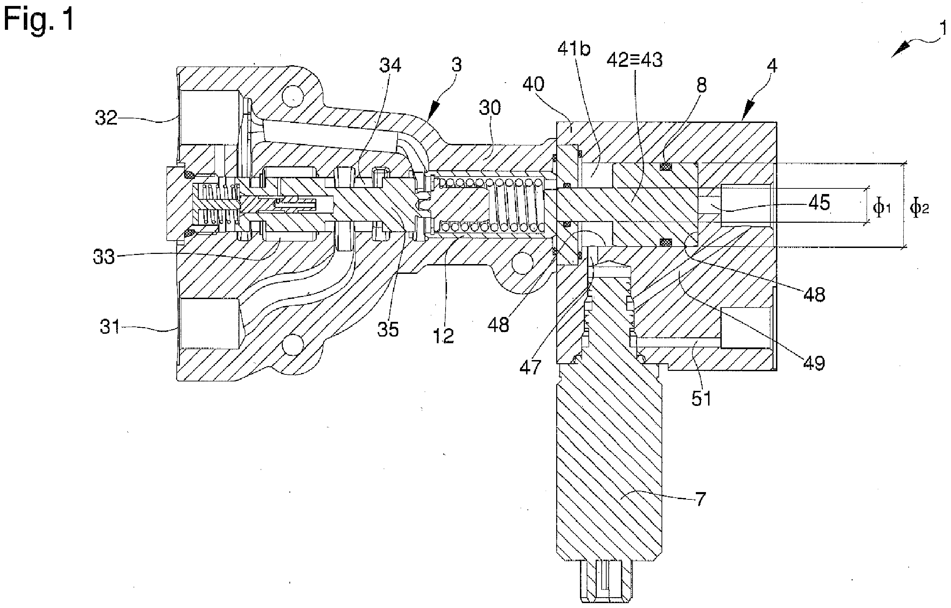

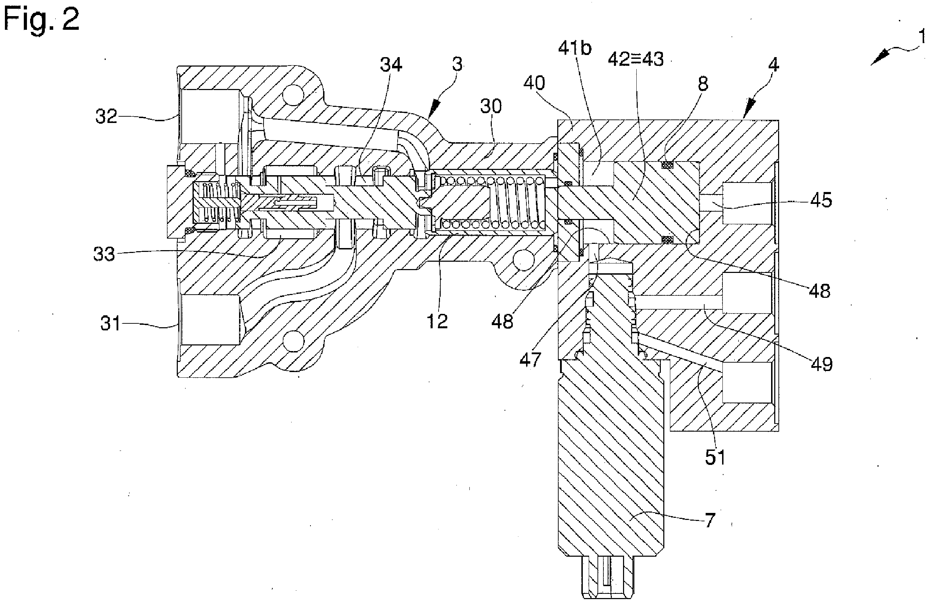

In a first embodiment shown in the figures 1 and 2, the device 4 comprises just one piloting piston 42, 43 therefore defining the two thrust areas mentioned above.

In the other embodiments shown in the figures from 3 to 8, the piloting piston 42, 43 comprises a first and a second portion 42 and 43 respectively, moving reciprocally to one another.

In this preferred embodiment, the piloting circuit 45 therefore applies a first action on the first and on the second portions 42 and 43, while the contrasting circuit 47 applies a second action only on the second portion 43 in contrast to the above-mentioned first action.

The thrust area on which the piloting circuit 45 acts corresponds therefore to the sum of the areas of the first and of the second portions facing onto the piloting chamber 41 a, while the thrust area onto which the contrasting circuit 47 acts corresponds to the thrust area of the second portion 43 only, which faces onto the contrasting chamber 41b.

More in particular, depending on the pressure in the contrasting circuit 47, and therefore on the entity of the second action applied by this on the second portion 43, the force acting on the piloting piston 42, 43 is changed as is, therefore, also the piloting ratio (meaning the ratio between the area of the piloting piston 42, 43 and the area of reaction of the distributor cursor 35).

The piloting ratio therefore continually varies along with the variation in pressure in the contrasting circuit 47, the pressure in the piloting circuit 45 being equal. In other words, the lower the pressure in the contrasting circuit 47 the greater the resulting force acting on the piloting piston 42, 43, hence there is a rapid increase in pressure in the chamber 34, while the greater the pressure in the contrasting circuit 47, the smaller the resulting force acting on the piloting piston 42, 43, hence the pressure in the chamber 34 increases in a less sudden way.

The first and the second portions 42 and 43 can therefore move in an integral way the one to the other towards the valve 3, in which case, depending on the pressure in the piloting circuit 45, the force changes which the second portion 43 applies on the first portion 42 and, therefore, the piloting ratio also changes, or they can move in an independent way the one to the other, in which case only the first portion 42 interacts with the distributor cursor 35.

Advantageously, the first portion 42 has a first extremity facing onto the piloting chamber 41a and which is therefore subject to the action applied by the piloting circuit 45, and an opposite second extremity suitable for interacting with the distributor cursor 35 by means of the spring bearing piston 12.

The second portion 43 in turn has a first extremity facing onto the piloting chamber 41a, and is therefore also subject to the action applied by the piloting circuit 45, and an opposite second extremity facing onto the contrasting chamber 41b, and therefore subject to the action applied by the contrasting circuit 47.

In the preferred embodiment shown in the illustrations, the second portion 43 has an external diameter greater than the first portion 42 and is fitted around it. The first portion 42 is therefore fitted sliding inside the second portion 43.

As can be seen in the illustrations, the extremity area of the first portion 42, suitable for interacting with the spring bearing piston 12, and the area inserted inside the second portion 43 and suitable for cooperating sealed with the same, have substantially the same diameter.

In this embodiment, the contrasting chamber 41b has a substantially annular shape and extends around the first portion 42.

Between the second portion 43 and the body 40 are placed the first sealing means 8 and between the first and the second portion 42 and 43 are placed second sealing means 9.

The end of stroke of the piloting piston 42, 43 is therefore defined in one direction by the bottom wall 46a and in the opposite direction by the spring bearing piston 12 resting against an abutment surface defined by the body 30.

Preferably, the second portion 43 has an abutment surface 50 suitable for contacting the first portion 42 to drag it in its movement due to the effect of said first action, i.e., approaching the braking valve 3.

More in detail, the abutment surface 50 is suitable for cooperating with the first extremity of the first portion 42, while the opposite extremity is suitable for interacting with the distributor cursor 35. When the second portion 43 is resting against the bottom wall 46a, the abutment surface 50 defines an end of stroke of the first portion 42.

The first and the second portion 42 and 43 therefore have the same stroke and can move in an integral or independent way the one to the other. Advantageously, in the embodiments shown in the figures 1 and from 3 to 5, the supply circuit 49 is connected to the piloting circuit 45.

More in detail, in this first embodiment, the supply circuit is directly connected to the piloting circuit 45.

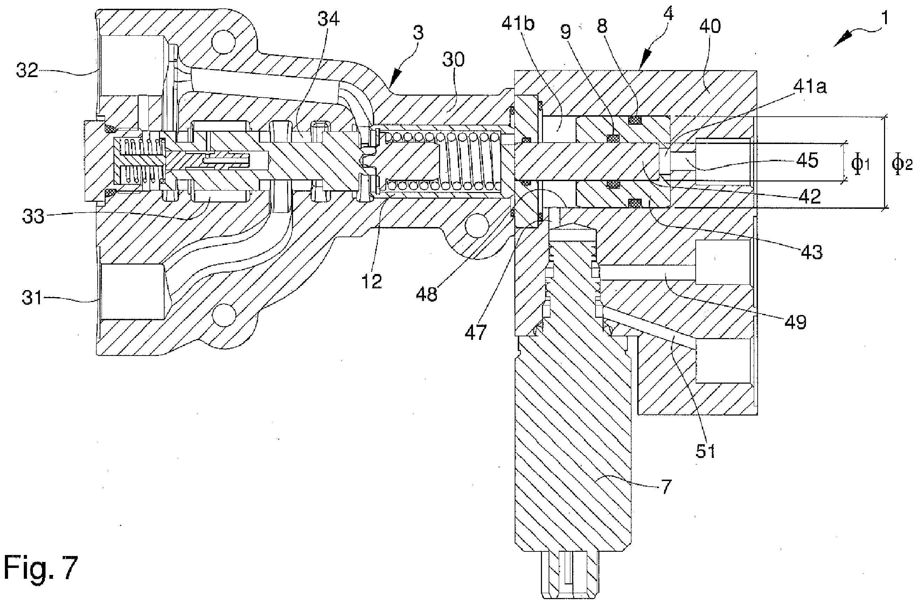

In the second and in the fourth embodiments shown in the figures 2 and 7 respectively, the supply circuit 49 is instead separate and independent from the piloting circuit 45. In this embodiment, the supply circuit 49 is therefore connected to a supply source separate from the braking line of the towing vehicle, such as, e.g., a second low-pressure line (e.g. 20 bar), which can be served by the same pump that serves the first line. This second embodiment permits regulating the contrast force acting on the second portion 43 whatever the pressure in the piloting circuit 45.

It follows therefore that in both the embodiments shown, following the connection of the contrasting circuit 47 to the supply circuit 49, the action applied by the piloting circuit 45 on the second portion 43 is contrasted by that applied by the contrasting circuit 47. More in particular, the second portion 43 can move in the same direction as the first portion 42 or also in the opposite direction depending on the balance of the forces acting on it, therefore resulting floating with respect to the first portion itself.

In both the embodiments shown, the device 4 then comprises a drain circuit 51. Advantageously, the connection means 7 are the type of a solenoid valve.

The solenoid valve 7 can be of the proportionate pressure adjustment type and, therefore, suitable for altering the pressure in the contrasting circuit 47 depending on the signal received, or can be of the ON/OFF type (e.g., a three-way valve).

Preferably, the solenoid valve 7 is of the normally discharge type, i.e., under normal operating conditions it is designed to connect the contrasting circuit 47 to the drain circuit 51, while when it is excited, it is suitable for changing state so as to connect the contrasting circuit 47 to the supply circuit 49.

The connection means 7 are operatively connected to a control device, e.g., an electronic unit 15, that can be operated to pressurize the contrasting circuit 47 and, therefore, the contrasting chamber 41 b.

Advantageously, sensor means are provided (not shown in the illustrations), such as, e.g., one or more load cells, operatively connected to the unit 15 and suitable for detecting at least one of the trailer's load and the traction/compression force applied by the trailer onto the towing vehicle. The unit 15 is programmed to start the connection means 7 according to the signal received by the sensor means, so as to consequently adjust the pressure in the contrasting circuit 47 and therefore the second force applied by this onto the piloting piston 42, 43. The unit 15 is therefore programmed to regulate in a substantially continuous way the pressure in the contrasting chamber 41b on the basis of the specific operating conditions.

Alternatively, the control device can be operatively connected to a braking device that activates after the towing vehicle has been braked.

The operation of the present invention is as follows.

Following the braking of the towing vehicle, the piloting circuit 45 applies a first action on both the portions 42 and 43 pushing them towards the braking valve 3 so as to promptly activate the trailer's braking system. During this phase (the duration of which depends on how the connection means 7 are activated), in fact, the first and the second portions 42 and 43 move together towards the braking valve 3, and so the working diameter corresponds to the greater diameter, i.e., to that of the second portion 43.

This operating configuration remains active until the solenoid valve 7, which as has been said, under normal operating conditions, connects the contrasting circuit 47 to the drain circuit 51, is excited. Until such time, in fact, the contrasting chamber 41b is connected to discharge and does not therefore apply any contrast action on the second portion 43, which therefore moves under the sole effect of the first action applied by the piloting circuit 45.

In fact, when the solenoid valve 7 changes state, the contrasting circuit 47 is connected to the pressurized supply circuit 49.

Following the connection of the contrasting circuit 47 to the supply circuit 49, the pressure in the contrasting chamber 41b gradually increases, thus applying a second action only on the second portion 43 which acts in contrast (i.e., in the opposite direction) to the first action applied by the piloting circuit 45 on the second portion itself.

More in particular, in the first and in the third embodiments shown in the figures from 3 to 5 respectively, the solenoid valve 7 is driven by the braking pressure and regulates the pressure of the contrasting circuit 47, consequently regulating the pressure in the contrasting chamber 41b.

In the initial part of braking, the pressure in the contrasting circuit 47, and therefore in the contrasting chamber 41b, is substantially zero and the force acting on the piloting piston 42, 43 is therefore at maximum (as is the piloting ratio) in relation to the piloting pressure.

Nevertheless, the initial pressure in the contrasting chamber 41b can be brought to a predefined value by the unit 15 depending on the signal received by the sensor means and relating to the load conditions of the trailer and/or the compression/traction force applied by the trailer itself on the towing vehicle.

As the pressure in the contrasting chamber 41b gradually increases by effect of the second action applied on the second portion 43, the resulting pressure acting on the latter is gradually reduced, consequently reducing the piloting ratio and the braking pressure, the piloting pressure being equal.

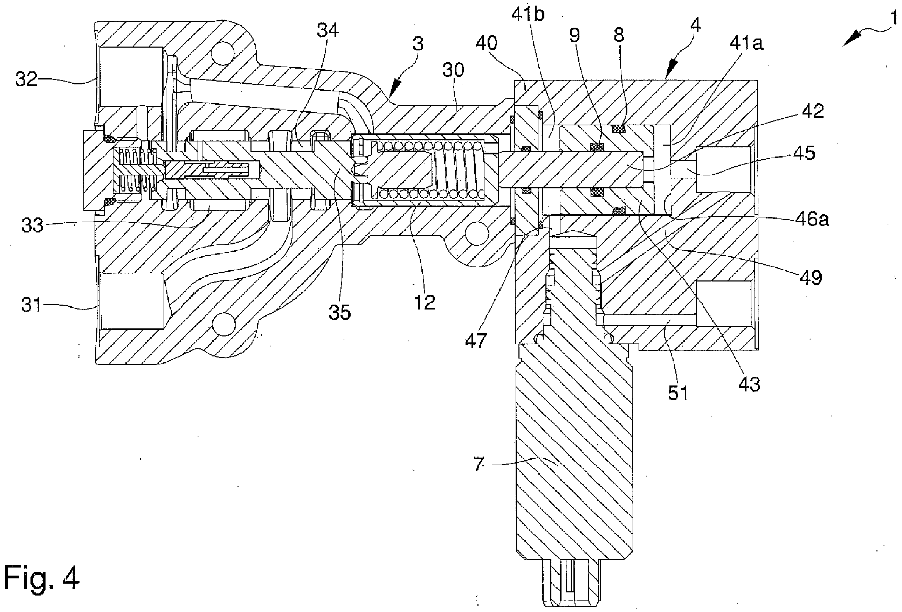

More in particular, as long as the pressure in the contrasting chamber 41b is below the pressure in the piloting chamber 41a (figure 4) the second portion 43 moves in the same direction as the first portion 42 and the piloting ratio takes on an intermediate value between the maximum and minimum values corresponding to the external diameter of the second portion 43 and to the external diameter of the first portion 42 respectively.

Conversely, when the pressure in the contrasting chamber 41b is greater or the same as the pressure in the piloting chamber 41 a, the second portion 43 moves in the opposite direction to the first portion 42, and so only the portion with the smaller diameter acts on the braking valve 3, thus obtaining the least possible piloting ratio.

In other words, in the first part of the braking phase, the piloting piston 42, 43 acts with its external diameter on the braking valve 3, and hence there is a rapid response to the braking of the towing vehicle, while in the second phase, the contrast action applied on the second portion 43 permits obtaining a plurality of intermediate piloting ratios, until the smaller piloting ratio is reached corresponding to the action of the first portion 42 only, so as to regulate the braking pressure in a continuous way on the basis of parameters detected by the sensor means.

It has in practice been ascertained how the described invention achieves the proposed objects and in particular the fact is underlined that the presence of a contrasting circuit acting on the piloting piston on the opposite side of the piloting circuit connected to the braking system of the towing vehicle and the presence of two portions of the piloting piston free of one another and with different diameters permits obtaining a rapid response of the trailer's braking system when the braking system of the towing vehicle is activated and, at the same time, a gradual modulation of the braking force on the trailer itself.

More in particular, the connection means permit managing the forces acting on the portion of the piloting piston of greater diameter, in such a way as to select the working diameter of the piloting piston itself which interacts with the braking valve.

Again, the piloting device forming the subject of the present invention permits maintaining the pressure pattern in the trailer's braking system according to the pressure in the braking system of the towing vehicle within pre-established limit values. In fact, even in the event of an electric default not permitting the change of state of the connecting solenoid valve, the force applied by the piloting piston will correspond to that relating to its external diameter or its internal diameter, the latter being sized so as to comply with the acceptable limit braking conditions.

## Claims

1. Piloting device (4) for piloting a braking valve of a trailer, comprising:
- a piloting circuit (45) that can be connected to the braking system of a towing vehicle;
- a hollow body (40) defining a chamber (41a, 41b) communicating with said piloting circuit (45) and inside which is housed sealed and sliding at least a piloting piston (42, 43) meant to cooperate with the braking valve (3) of a trailer;
**characterized by** the fact that it comprises at least a contrasting circuit (47) communicating with said chamber (41a, 41b) on the opposite side of said piloting circuit (45) with respect to said piloting piston (42, 43) in such a way that said piloting circuit (45) and said contrasting circuit (47) apply a first and a second action, respectively, on the piloting piston itself directed towards an opposite direction to one another.

2. Device (4) according to claim 1, **characterized by** the fact that said piloting piston (42, 43) splits said chamber (41a, 41b) into a piloting chamber (41a) and a contrasting chamber (41b) arranged on opposite sides to one another and communicating with said piloting circuit (45) and with said contrasting circuit (47) respectively, where said piloting chamber (41a) and said contrasting chamber (41b) face onto respective thrust areas defined by said piloting piston (42, 43) and different to one another.

3. Device (4) according to claim 2, **characterized by** the fact that the thrust area onto which said piloting chamber (41a) faces is bigger than the thrust area onto which said contrasting chamber (41b) faces.

4. Device (4) according to one or more of the preceding claims, **characterized by** the fact that said piloting piston comprises a first and a second portion (42, 43) moving reciprocally to one another, said piloting circuit (45) applying a first action on said first and on said second portions (42, 43) and said contrasting circuit (47) applying a second action on said second portion (43) opposite said first action.

5. Device (4) according to claim 4, **characterized by** the fact that said second portion (43) is fitted sealed onto said first portion (42), said second portion (43) having an abutment surface (50) suitable for contacting said first portion (42) to drag it in its movement due to the effect of said first action.

6. Device (4) according to claim 5, **characterized by** the fact that said first portion (42) has at least an extremity area suitable for cooperating with the braking valve (3) of a trailer and at least another area inserted inside said second portion (43) and suitable for cooperating sealed with the latter, where such areas of the first portion (42) substantially have the same diameter.

7. Device (4) according to one or more of the claims from 4 to 6, **characterized by** the fact that said first and second portions (42, 43) have a relative extremity facing said piloting chamber (41a) and defining one of said thrust areas and only the opposite extremity of said second portion (43) faces on said contrasting chamber (41 b) defining the other of said thrust areas.

8. Device (4) according to claim 7, **characterized by** the fact that said contrasting chamber (41b) has a substantially annular shape and extends around said first portion (42).

9. Device (4) according to one or more of the preceding claims, **characterized by** the fact that it comprises connection means (7) which can be started to place said contrasting circuit (47) in communication with a supply circuit (49) which can be connected to a source under pressure.

10. Device (4) according to claim 9, **characterized by** the fact that said supply circuit (49) is separate and independent from said piloting circuit (45).

11. Device (4) according to claim 9, **characterized by** the fact that said supply circuit (49) communicates with said piloting circuit (45).

12. Device (4) according to one or more of the preceding claims, **characterized by** the fact that said piloting circuit (45) corresponds to the braking circuit of the towing vehicle.

13. Device (4) according to one or more of the preceding claims, **characterized by** the fact that it comprises sensor means suitable for detecting at least one of the load of the trailer and the traction/compression force applied by the trailer onto the towing vehicle, at least an electronic unit operatively connected to said sensor means and to said connection means (7), where said electronic unit is programmed to start said connection means (7) according to the signal received by said sensor means to adjust the second force applied by said contrasting circuit (47) onto said piloting piston (42, 43).

## Patentansprüche

1. Steuerungseinrichtung (4) für die Steuerung eines Anhängerbremsventils, mit:
- einer Steuerungsschaltung (45), die mit dem Bremssystem eines Zugfahrzeugs verbunden werden kann;
- einem Hohlkörper (40), der eine Kammer (41a, 41b) bildet, die mit der Steuerungsschaltung (45) kommuniziert und in welcher abgedichtet und gleitend wenigstens ein Steuerkolben (42, 43) aufgenommen ist, der dazu gedacht ist, mit dem Anhängerbremsventil (3) zusammenzuwirken;
**dadurch gekennzeichnet, dass** diese wenigstens eine Gegenschaltung (47) umfasst, die mit der Kammer (41a, 41b) auf der in Bezug zu dem Steuerkolben (42, 43) entgegengesetzten Seite der Steuerungsschaltung (45) kommuniziert, derart, dass die Steuerungsschaltung (45) und die Gegenschaltung (47) eine erste bzw. eine zweite Aktion auf den Steuerkolben ausüben, die in eine zueinander entgegengesetzte Richtung gerichtet ist.

2. Einrichtung (4) nach Anspruch 1, **dadurch gekennzeichnet, dass** der Steuerkolben (42, 43) die Kammer (41a, 41b) in eine Steuerungskammer (41a) und eine Gegenkammer (41b) teilt, die auf einander gegenüberliegenden Seiten angeordnet sind und mit der Steuerungsschaltung (45) bzw. mit der Gegenschaltung (47) kommunizieren, wobei die Steuerungskammer (41a) und die Gegenkammer (41b) jeweiligen Druckflächen zugewandt sind, die durch den Steuerkolben (42, 43) gebildet werden und einander unterschiedlich sind.

3. Einrichtung (4) nach Anspruch 2, **dadurch gekennzeichnet, dass** die Druckfläche, welcher die Steuerungskammer (41a) zugewandt ist, größer ist, als die Druckfläche, welcher die Gegenkammer (41b) zugewandt ist.

4. Einrichtung (4) nach einem oder mehreren der vorhergehenden Ansprüche, **dadurch gekennzeichnet, dass** der Steuerkolben einen ersten und einen zweiten Abschnitt (42, 43) umfasst, die sich reziprok zueinander bewegen, wobei die Steuerungsschaltung (45) eine erste Aktion auf den ersten und auf den zweiten Abschnitt (42, 43) ausübt und die Gegenschaltung (47) auf den zweiten Abschnitt (43) eine zweite Aktion entgegengesetzt zu der ersten Aktion ausübt.

5. Einrichtung (4) nach Anspruch 4, **dadurch gekennzeichnet, dass** der zweite Abschnitt (43) abgedichtet auf dem ersten Abschnitt (42) angebracht ist, wobei der zweite Abschnitt (43) eine Anstoßfläche (50) aufweist, die zum Berühren des ersten Abschnitts (42) geeignet ist, um diesen aufgrund des Effekts der ersten Aktion in seine Bewegung zu ziehen.

6. Einrichtung (4) nach Anspruch 5, **dadurch gekennzeichnet, dass** der erste Abschnitt (42) aufweist wenigstens eine Extremitätsfläche, die für ein Zusammenwirken mit dem Anhängerbremsventil (3) geeignet ist, und wenigstens eine weitere Fläche, die in den zweiten Abschnitt (43) eingeführt ist und für ein abgedichtetes Zusammenwirken mit dem Letzteren geeignet ist, wobei solche Flächen des ersten Abschnitts (42) im Wesentlichen den gleichen Durchmesser haben.

7. Einrichtung (4) nach einem oder mehreren der Ansprüche 4 bis 6, **dadurch gekennzeichnet, dass** der erste und zweite Abschnitt (42, 43) eine entsprechende Extremität haben, die der Steuerungskammer (41a) zugewandt ist und eine der Druckflächen bildet und nur die entgegengesetzte Extremität des zweiten Abschnitts (43) der Gegenkammer (41b) zugewandt ist und die andere der Druckflächen bildet.

8. Einrichtung (4) nach Anspruch 7, **dadurch gekennzeichnet, dass** die Gegenkammer (41b) eine im Wesentlichen ringförmige Gestalt hat und sich um den ersten Abschnitt (42) herum erstreckt.

9. Einrichtung (4) nach einem oder mehreren der vorhergehenden Ansprüche, **dadurch gekennzeichnet, dass** diese Verbindungsmittel (7) umfasst, welche dazu veranlasst werden können, die Gegenschaltung (47) in Kommunikation mit einer Versorgungsschaltung (49) zu setzen, welche mit einer Druckquelle verbunden werden kann.

10. Einrichtung (4) nach Anspruch 9, **dadurch gekennzeichnet, dass** die Versorgungsschaltung (49) separat und unabhängig von der Steuerungsschaltung (45) ist.

11. Einrichtung (4) nach Anspruch 9, **dadurch gekennzeichnet, dass** die Versorgungsschaltung (49) mit der Steuerungsschaltung (45) kommuniziert.

12. Einrichtung (4) nach einem oder mehreren der vorhergehenden Ansprüche, **dadurch gekennzeichnet, dass** die Steuerungsschaltung (45) mit der Bremsschaltung des Zugfahrzeugs korrespondiert.

13. Einrichtung (4) nach einem oder mehreren der vorhergehenden Ansprüche, **dadurch gekennzeichnet, dass** diese umfasst Sensormittel, die zum Detektieren wenigstens der Last des Anhängers und/oder der durch den Anhänger auf das Zugfahrzeug ausgeübten Traktions-/Kompressionskraft geeignet sind, wenigstens eine elektronische Einheit, die mit den Sensormitteln und mit den Verbindungsmitteln (7) operativ verbunden ist, wobei die elektronische Einheit so programmiert ist, dass diese die Verbindungsmittel (7) gemäß dem durch die Sensormittel empfangenen Signal veranlasst, die durch die Gegenschaltung (47) auf den Steuerkolben (42, 43) aufgebrachte zweite Kraft einzustellen.

## Revendications

1. Dispositif de pilotage (4) pour le pilotage d'une vanne de freinage d'une remorque, comprenant:
- un circuit de pilotage (45) qui peut être connecté au système de freinage d'un véhicule tracteur;
- un corps creux (40) délimitant une chambre (41 a, 41 b), en communication avec ledit circuit de pilotage (45), et à l'intérieur duquel est logé, de façon étanche et coulissante, au moins un piston de pilotage (42, 43) destiné à coopérer avec la vanne de freinage (3) d'une remorque,
**caractérisé en ce qu'**il comprend au moins un circuit antagoniste (47) en communication avec ladite chambre (41 a, 41 b) sur le côté opposé au dit circuit de pilotage (45) par rapport audit piston de pilotage (42, 43) d'une manière telle que ledit circuit de pilotage (45) et ledit circuit antagoniste (47) appliquent respectivement une première et une seconde action sur le piston de pilotage lui-même, orientées dans des directions inverses à l'une de l'autre.

2. Dispositif (4) selon la revendication 1, caractérisé en ce quel ledit piston de pilotage (42, 43) sépare ladite chambre (41 a, 41 b) en une chambre de pilotage (41 a) et une chambre antagoniste (41 b) disposées sur des côtés opposés l'une de l'autre et en communication avec ledit circuit de pilotage (45) et ledit circuit antagoniste (47), respectivement, dans lequel ladite chambre de pilotage (41 a) et ladite chambre antagoniste (41 b) se font face sur des zones de poussée respectives définies par ledit piston de pilotage (42, 43) et à l'opposé l'une de l'autre.

3. Dispositif (4) selon la revendication 2, caractérisé en ce la zone de poussée sur laquelle agit ladite chambre de pilotage (41 a) est plus grande que la zone de poussée sur laquelle agit ladite chambre antagoniste (41 b).

4. Dispositif (4) selon l'une ou plusieurs des revendications précédentes, **caractérisé en ce que** ledit piston de pilotage comprend une première partie et une seconde partie (42, 43) se déplaçant réciproquement l'une par rapport à l'autre, ledit circuit de pilotage (45) appliquant une première action sur lesdites première et seconde parties (42, 43) et ledit circuit antagoniste (47) appliquant une deuxième action sur ladite deuxième partie (43) et opposée à ladite première action.

5. Dispositif (4) selon la revendication 4, **caractérisé en ce que** ladite seconde partie (43) est montée de manière étanche sur ladite première partie (42), ladite seconde partie (43) ayant une surface de butée (50) adaptée pour venir contacter ladite première partie (42) pour l'entrainer dans son mouvement en raison de l'effet ladite première action.

6. Dispositif (4) selon la revendication 5, **caractérisé en ce que** ladite première partie (42) comporte au moins une zone d'extrémité apte à coopérer avec la vanne de freinage (3) d'une remorque et au moins une autre zone insérée à l'intérieur de ladite seconde partie (43 ) et apte à coopérer de manière étanche avec celle-ci, où les zones en question de la première partie (42) ont sensiblement le même diamètre.

7. Dispositif (4) selon l'une ou plusieurs des revendications 4 à 6, **caractérisé en ce que** lesdites première et seconde parties (42, 43) présentent une extrémité relative faisant face à ladite chambre de pilotage (41 a) et définissant une desdites zones de poussée, et **en ce que** seulement l'extrémité opposée de ladite deuxième partie (43) fait face à ladite chambre antagoniste (41 b) définissant l'autre desdites zones de poussée.

8. Dispositif (4) selon la revendication 7, **caractérisé en ce que** ladite chambre antagoniste (41 b) a une forme sensiblement annulaire et est disposée autour de ladite première partie (42).

9. Dispositif (4) selon l'une ou plusieurs des revendications précédentes, **caractérisé en ce qu'**il comprend des moyens de connexion (7) qui peuvent être activés pour mettre ledit circuit antagoniste (47) en communication avec un circuit d'alimentation (49) qui peut être relié à une source de pression.

10. Dispositif (4) selon la revendication 9, **caractérisé en ce que** ledit circuit d'alimentation (49) est séparé et indépendant dudit circuit de pilotage (45).

11. Dispositif (4) selon la revendication 9, **caractérisé en ce que** ledit circuit d'alimentation (49) communique avec ledit circuit de pilotage (45).

12. Dispositif (4) selon l'une ou plusieurs des revendications précédentes, **caractérisé en ce que** ledit circuit de pilotage (45) correspond au circuit de freinage du véhicule tracteur.

13. Dispositif (4) selon l'une ou plusieurs des revendications précédentes, **caractérisé en ce qu'**il comprend
des moyens de captation aptes à détecter au moins l'une de la charge de la remorque et de la force de traction / compression appliquée par la remorque sur le véhicule tracteur,
au moins une unité électronique relié fonctionnellement audit moyens de captation et auxdits moyens de connexion (7),
où ladite unité électronique est programmée pour activer lesdits moyens de connexion (7) en fonction du signal reçu par moyens de captation pour ajuster la seconde force appliquée par ledit circuit antagoniste (47) sur ledit piston de pilotage (42, 43).
